# EUROPEAN PATENT APPLICATION

(11) **EP 4 387 138 A1**
(43) Date of publication of application: **19.06.2024**
(21) Application number: 21957167.6
(22) Date of filing: 18.09.2021
(51) Int. Cl.: H04L 1/16

(54) **VIDEO TRANSMISSION METHOD AND ELECTRONIC DEVICE**

(71) Applicant: Huawei Technologies Co., Ltd., Shenzhen, Guangdong 518129 (CN)
(72) Inventor: LIU, Kang, Shenzhen, Guangdong 518129 (CN); LIU, Guoen, Shenzhen, Guangdong 518129 (CN); YAN, Huizhi, Shenzhen, Guangdong 518129 (CN)
(74) Representative: Gill Jennings & Every LLP
(86) International application number: PCT/CN2021/119379
(87) International publication number: WO 2023/039890

(57) **Abstract**

This application provides a video transmission method and an electronic device. The method is applied to an encoder, and the method includes: The encoder generates a video frame, where the video frame includes a plurality of image blocks, and each of the plurality of image blocks is sent within a respective specified period; and the encoder sends a target frame to a decoder if a first image block in the plurality of image blocks is not completely sent at an end moment of a corresponding specified period, where the target frame is used to request feedback information from the decoder. According to the solution provided in this application, a delay of replying with the feedback information by the decoder can be reduced, and statuses of the encoder and the decoder can be synchronized.

## Description

### TECHNICAL FIELD

This application relates to the field of electronic technologies, and more specifically, to a video transmission method and an electronic device.

### BACKGROUND

In a scenario of video signal transmission in the wireless communication field, based on transmission control protocol/Internet protocol (transmission control protocol/Internet protocol, TCP/IP) feedback information, an encoder may send data hierarchically after accessing a channel; and a decoder receives the data, and accesses the channel to feed back a receiving status after a specific delay.

The decoder may feed back the receiving status in the following manner: a feedback manner of block acknowledgement (block ack). First, the encoder may initiate a request to send/clear to send (request to send/clear to send, RTS/CTS) or a null/acknowledgement (NULL/(action, ACK)) short frame transaction to protect a segment of transmission opportunity (transmission opportunity, TXOP) sequence. Then, the encoder may continuously send a plurality of frames of stream data in a TXOP, set an acknowledgement policy field of a medium access control (medium access control, MAC) frame of the data to block ack, and request feedback information of all the stream data by using a block acknowledgement request (block ack request, BAR) frame after completing sending the plurality of frames of stream data. An entire interaction process may be performed in the same TXOP, thereby saving time for the encoder and the decoder to contend for a channel again. However, in this manner, the encoder can send, to the decoder only after successfully completing sending the plurality of frames of stream data, the BAR frame used to request the feedback information, and this manner belongs to a delayed acknowledgement manner. Consequently, the encoder cannot obtain the receiving status of the decoder in real time, and statuses of the encoder and the decoder cannot be synchronized.

### SUMMARY

This application provides a video transmission method and an electronic device, to reduce a delay of replying with feedback information by a decoder, and synchronize statuses of an encoder and the decoder.

According to a first aspect, a video transmission method is provided, where the method is applied to an encoder, and the method includes: The encoder generates a video frame, where the video frame includes a plurality of image blocks, and each of the plurality of image blocks is sent within a respective specified period; and
the encoder sends a target frame to a decoder if a first image block in the plurality of image blocks is not completely sent at an end moment of a corresponding specified period, where the target frame is used to request feedback information from the decoder.

It should be noted that in this embodiment of this application, that the first image block is not completely sent at the end moment of the corresponding specified period may be understood as follows: Some data in the first image block is not sent to the decoder until the end moment of the specified period corresponding to the first image block.

According to the solution provided in this application, when determining that the first image block in the plurality of image blocks included in the video frame is not completely sent at the end moment of the corresponding specified period, the encoder sends, to the decoder, the target frame used to request the feedback information. Because when determining that the first image block is not completely sent at the end moment of the corresponding specified period, the encoder actively sends the target frame to the decoder to request the decoder to send the feedback information, the encoder may send, to the decoder before the plurality of video frames are completely sent, a BAR frame used to request the feedback information, so that a delay of replying with the feedback information by the decoder can be reduced. Therefore, the encoder can synchronize statuses of the encoder and the decoder or learn of a synchronization status of the decoder for the received video frame based on the received feedback information.

With reference to the first aspect, in some possible implementations, the target frame is a probe frame, the probe frame indicates the decoder to feed back a status of an image block of the video frame received by the decoder, and the feedback information represents a status of the video frame received by the decoder; or
the target frame is a synchronization frame, the synchronization frame indicates the decoder to perform synchronization processing on the received video frame, and the feedback information represents a synchronization status of the decoder for the received video frame.

According to the solution provided in this application, content indicated by the target frame sent by the encoder to the decoder is different, and content represented by the feedback information sent by the decoder to the encoder is different. Specifically, if the target frame is the probe frame indicating the decoder to feed back the status of the image block of the video frame received by the decoder, the feedback information represents the status of the video frame received by the decoder; or if the target frame is the synchronization frame indicating the decoder to perform synchronization processing on the received video frame, the feedback information represents the synchronization status of the decoder for the received video frame. Regardless of the content indicated by the target frame and the content represented by the feedback information, an objective is to synchronize statuses of the video frame on two sides, namely, the encoder and the decoder. A difference lies in that an action of synchronizing the statuses of the video frame on the two sides is performed by different entities (to be specific, if the target frame is the probe frame, the encoder synchronizes the statuses of the video frame on the two sides; or if the target frame is the synchronization frame, the decoder synchronizes the statuses of the video frame on the two sides). In this way, flexibility of synchronizing the statuses of the video frame on the two sides, namely, the encoder and the decoder, may be improved.

With reference to the first aspect, in some possible implementations, the target frame is a medium access control MAC frame.

With reference to the first aspect, in some possible implementations, when the target frame is the probe frame, the target frame is any one of a control frame, a data frame, or a management frame; or
when the target frame is the synchronization frame, the target frame is one of a data frame or a management frame.

According to the solution provided in this application, a specific format of the target frame is related to the content indicated by the target frame. If the target frame is the probe frame indicating the decoder to feed back the status of the image block of the video frame received by the decoder, the target frame may be any one of the control frame, the data frame, or the management frame; or if the target frame is the synchronization frame indicating the decoder to perform synchronization processing on the received video frame, the target frame may be one of the data frame or the management frame. This helps synchronize the statuses of the video frame on the two sides, namely, the encoder and the decoder.

With reference to the first aspect, in some possible implementations, the control frame includes a short probe frame;
the data frame includes a quality of service QoS null frame or a QoS data frame; and
the management frame includes an action no acknowledgement frame or an acknowledgement frame.

With reference to the first aspect, in some possible implementations, when the target frame is the probe frame, a frame header of the MAC frame carries a private value, and the private value indicates the encoder to request the feedback information from the decoder.

According to the solution provided in this application, when the target frame is the probe frame, the frame header of the MAC frame carries the private value indicating the encoder to request the feedback information from the decoder. After the decoder receives the probe frame, because the probe frame carries the private value indicating the decoder to feed back information, the decoder may immediately send, to the encoder, the feedback information representing the status of the video frame received by the decoder, and the encoder may synchronize the status with that of the decoder based on the feedback information, to ensure a synchronization effect of image transmission.

With reference to the first aspect, in some possible implementations, the target frame is the control frame, and a control field of a frame header of the control frame is set to the private value;
the target frame is the data frame, and a high-throughput control HTC field of a frame header of the data frame is set to the private value; or
the target frame is the management frame, and an HTC field of a frame header of the management frame is set to the private value, or
a first field in a payload of the management frame is set to the private value.

With reference to the first aspect, in some possible implementations, when the target frame is the synchronization frame, a data part of the MAC frame carries indication information, and the indication information indicates the decoder to perform synchronization processing on the received video frame.

According to the solution provided in this application, when the target frame is the synchronization frame, the data part of the MAC frame carries the indication information indicating the decoder to perform synchronization processing on the received video frame. After the decoder receives the synchronization frame, because the synchronization frame carries the indication information indicating the decoder to perform synchronization processing on the received video frame, the decoder may synchronize the status with that of the encoder based on the synchronization frame, to ensure a synchronization effect of image transmission.

With reference to the first aspect, in some possible implementations, if the encoder does not receive the feedback information, the method further includes: The encoder resends the target frame to the decoder.

According to the solution provided in this application, when the encoder does not receive the feedback information sent by the decoder, the encoder may resend, to the decoder, the target frame used to request the feedback information, to expect to successfully receive the feedback information sent by the decoder, so that the encoder synchronizes the statuses of the encoder and the decoder or learns of the synchronization status of the decoder for the received video frame based on the feedback information.

With reference to the first aspect, in some possible implementations, a rate at which the encoder resends the target frame to the decoder is less than a first rate, and the first rate is a rate at which the encoder sends the target frame to the decoder when the first image block is not completely sent at the end moment of the corresponding specified period.

According to the solution provided in this application, the rate at which the encoder resends the target frame to the decoder is less than the first rate, so that a probability that the encoder successfully receives the feedback information can be increased. Further, the encoder may synchronize the statuses of the encoder and the decoder or learn of the synchronization status of the decoder for the received video frame based on the feedback information received in real time.

With reference to the first aspect, in some possible implementations, the rate at which the encoder sends the target frame to the decoder is set to at least one of the following:
an expected rate collected by a system, a rate at which the target frame is successfully sent recently, or a mapping value of the rate at which the target frame is successfully sent recently.

With reference to the first aspect, in some possible implementations, the image block includes a tile tile or a slice slice segment.

According to a second aspect, a video transmission method is provided, where the method is applied to a decoder, and the method includes: The decoder receives a target frame, where the target frame is used to request feedback information, and the target frame is sent by an encoder when a first image block in a plurality of image blocks is not completely sent at an end moment of a corresponding specified period; and
the decoder sends the feedback information to the encoder in response to the target frame.

According to the solution provided in this application, the decoder sends the feedback information to the encoder in response to the received target frame. Because the target frame is sent by the encoder when the encoder determines that the first image block is not completely sent at the end moment of the corresponding specified period, a delay of replying with the feedback information by the decoder may be reduced. This helps synchronize statuses on two sides, namely, the encoder and the decoder.

With reference to the second aspect, in some possible implementations, the target frame is a probe frame, the probe frame indicates the decoder to feed back a status of an image block of a video frame received by the decoder, and the feedback information represents a status of the video frame received by the decoder; or
the target frame is a synchronization frame, the synchronization frame indicates the decoder to perform synchronization processing on the received video frame, and the feedback information represents a synchronization status of the decoder for the received video frame.

According to the solution provided in this application, content indicated by the target frame is different, and content represented by the feedback information sent by the decoder to the encoder is different. Specifically, if the target frame is the probe frame indicating the decoder to feed back the status of the image block of the video frame received by the decoder, the feedback information represents the status of the video frame received by the decoder; or if the target frame is the synchronization frame indicating the decoder to perform synchronization processing on the received video frame, the feedback information represents the synchronization status of the decoder for the received video frame. Regardless of the content indicated by the target frame and the content represented by the feedback information, an objective is to synchronize statuses of the video frame on two sides, namely, the encoder and the decoder. A difference lies in that an action of synchronizing the statuses of the video frame on the two sides is performed by different entities (to be specific, if the target frame is the probe frame, the encoder synchronizes the statuses of the video frame on the two sides; or if the target frame is the synchronization frame, the decoder synchronizes the statuses of the video frame on the two sides). In this way, flexibility of synchronizing the statuses of the video frame on the two sides, namely, the encoder and the decoder, may be improved.

With reference to the second aspect, in some possible implementations, the target frame is a medium access control MAC frame.

With reference to the second aspect, in some possible implementations, when the target frame is the probe frame, the target frame is any one of a control frame, a data frame, or a management frame; or
when the target frame is the synchronization frame, the target frame is one of a data frame or a management frame.

According to the solution provided in this application, a specific format of the target frame is related to the content indicated by the target frame. If the target frame is the probe frame indicating the decoder to feed back the status of the image block of the video frame received by the decoder, the target frame may be any one of the control frame, the data frame, or the management frame; or if the target frame is the synchronization frame indicating the decoder to perform synchronization processing on the received video frame, the target frame may be one of the data frame or the management frame. This helps synchronize the statuses of the video frame on the two sides, namely, the encoder and the decoder.

With reference to the second aspect, in some possible implementations, the control frame includes a short probe frame;
the data frame is a quality of service QoS null frame or a QoS data frame; and
the management frame is an action no acknowledgement frame or an acknowledgement frame.

With reference to the second aspect, in some possible implementations, when the target frame is the probe frame, a frame header of the MAC frame carries a private value, and the private value indicates the encoder to request the feedback information from the decoder.

According to the solution provided in this application, when the target frame is the probe frame, the frame header of the MAC frame carries the private value indicating the encoder to request the feedback information from the decoder. After the decoder receives the probe frame, because the probe frame carries the private value indicating the decoder to feed back information, the decoder may immediately send, to the encoder, the feedback information representing the status of the video frame received by the decoder, and the encoder may synchronize the status with that of the decoder based on the feedback information, to ensure a synchronization effect of image transmission.

With reference to the second aspect, in some possible implementations, the target frame is the control frame, and a control field of a frame header of the control frame is set to the private value;
the target frame is the data frame, and a high-throughput control HTC field of a frame header of the data frame is set to the private value; or
the target frame is the management frame, and an HTC field of a frame header of the management frame is set to the private value, or
a first field in a payload of the management frame is set to the private value.

With reference to the second aspect, in some possible implementations, when the target frame is the synchronization frame, a data part of the MAC frame carries indication information, and the indication information indicates the decoder to perform synchronization processing on the received video frame.

According to the solution provided in this application, when the target frame is the synchronization frame, the data part of the MAC frame carries the indication information indicating the decoder to perform synchronization processing on the received video frame. After the decoder receives the synchronization frame, because the synchronization frame carries the indication information indicating the decoder to perform synchronization processing on the received video frame, the decoder may synchronize the status with that of the encoder based on the synchronization frame, to ensure a synchronization effect of image transmission.

With reference to the second aspect, in some possible implementations, that the decoder sends the feedback information to the encoder includes: A data link layer in the decoder generates the feedback information based on the target frame; and
the decoder sends the feedback information to the encoder.

According to the solution provided in this application, the data link layer in the decoder generates the feedback information based on the received target frame, and sends the feedback information to the decoder. Because the feedback information is generated at the data link layer in the decoder and sent to the encoder by using a physical layer, a delay of transmitting the feedback information by using a bidirectional network layer and a bidirectional transport layer can be reduced.

With reference to the second aspect, in some possible implementations, a rate at which the decoder sends the feedback information to the encoder is set to at least one of the following:
an expected rate collected by a system, a rate at which a video frame sent by the encoder is successfully received recently, or a mapping value of the rate at which the video frame sent by the encoder is successfully received recently.

According to a third aspect, an apparatus is provided. The apparatus is included in an electronic device, and the apparatus has a function of implementing behavior of the electronic device in the foregoing aspects and the possible implementations of the foregoing aspects. The function may be implemented by hardware, or may be implemented by hardware executing corresponding software. The hardware or the software includes one or more modules or units corresponding to the foregoing function.

According to a fourth aspect, an electronic device is provided, and includes one or more processors, a memory, one or more application programs, and one or more computer programs. The one or more computer programs are stored in the memory, and the one or more computer programs include instructions. When the instructions are executed by the electronic device, the electronic device is enabled to perform the method in any possible implementation of the first aspect or any possible implementation of the second aspect.

According to a fifth aspect, a video transmission apparatus is provided. The apparatus includes at least one processor, and when program instructions are executed in the at least one processor, the method in any possible implementation of the first aspect or any possible implementation of the second aspect is implemented.

According to a sixth aspect, a computer storage medium is provided, and includes computer instructions. When the computer instructions are run on an electronic device or a processor, the electronic device or the processor is enabled to perform the method in any possible implementation of the first aspect or any possible implementation of the second aspect.

According to a seventh aspect, a computer program product is provided. When the computer program product runs on an electronic device or a processor, the electronic device or the processor is enabled to perform the method in any possible design of the first aspect or any possible design of the second aspect.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3a is a schematic diagram of a scenario to which an embodiment of this application is applied;
FIG. 3b is a schematic diagram of another scenario to which an embodiment of this application is applied;
FIG. 3c is a schematic diagram of still another scenario to which an embodiment of this application is applied;
FIG. 4 is a schematic diagram of a TCP/IP communication protocol-based feedback manner according to this application;
FIG. 5 is a schematic diagram of frame interaction between an encoder and a decoder according to this application;
FIG. 6 is a schematic diagram of a video transmission method according to an embodiment of this application;
FIG. 7 is a schematic diagram of frame interaction between an encoder and a decoder according to an embodiment of this application;
FIG. 8 is a schematic diagram of a MAC frame format according to an embodiment of this application;
FIG. 9 is another schematic diagram of frame interaction between an encoder and a decoder according to an embodiment of this application;
FIG. 10 is still another schematic diagram of frame interaction between an encoder and a decoder according to an embodiment of this application;
FIG. 11 is yet another schematic diagram of frame interaction between an encoder and a decoder according to an embodiment of this application;
FIG. 12 is yet another schematic diagram of frame interaction between an encoder and a decoder according to an embodiment of this application;
FIG. 13 is yet another schematic diagram of frame interaction between an encoder and a decoder according to an embodiment of this application;
FIG. 14 is a schematic diagram of another TCP/IP communication protocol-based feedback manner according to an embodiment of this application;
FIG. 15 is a schematic block diagram of another electronic device according to an embodiment of this application;
FIG. 16 is a schematic block diagram of still another electronic device according to an embodiment of this application; and
FIG. 17 is a schematic block diagram of yet another electronic device according to an embodiment of this application.

### DESCRIPTION OF EMBODIMENTS

The following describes technical solutions in this application with reference to the accompanying drawings.

A method in embodiments of this application may be applied to an electronic device such as a smartphone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

The following terms "first" and "second" are merely intended for a purpose of description, and shall not be understood as an indication or implication of relative importance or implicit indication of a quantity of indicated technical features. Therefore, a feature defined by "first" or "second" may explicitly or implicitly include one or more of the features.

A video transmission method provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

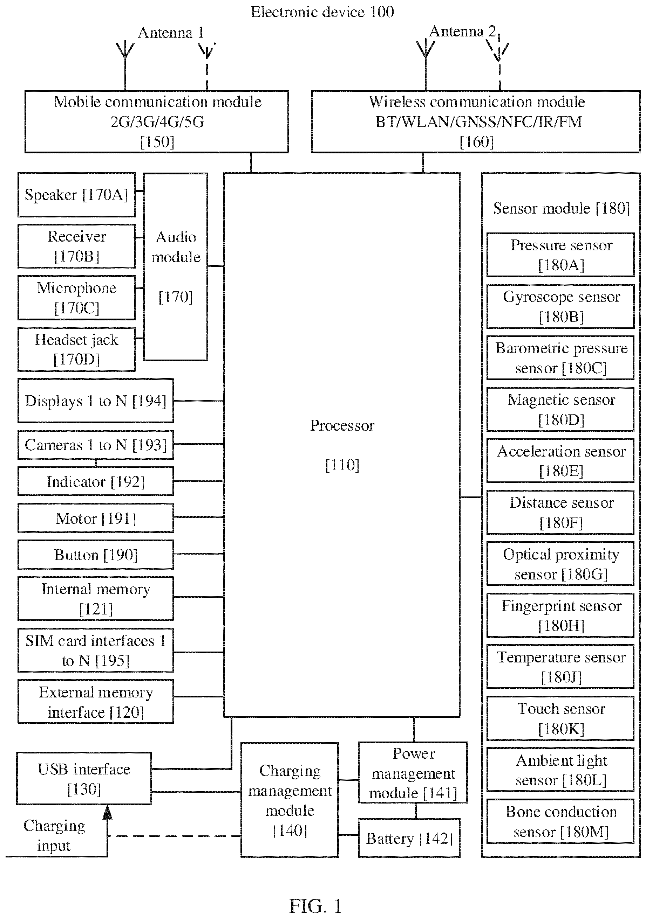

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

The memory may be further disposed in the processor 110, and is configured to store instructions and data. In some embodiments, the memory in the processor 110 is a cache. The memory may store instructions or data that has been just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication including 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal by using an audio device (which is not limited to the speaker 170A, the phone receiver 170B, or the like), or displays an image or a video by using the display 194. In some embodiments, the modem processor may be an independent component. In some other embodiments, the modem processor may be independent of the processor 110, and is disposed in a same component with the mobile communication module 150 or another functional module.

The wireless communication module 160 may provide a solution to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computation, and is configured to render an image. The processor 110 may include one or more GPUs, which execute program instructions to generate or change display information. The display 194 is configured to display an image, a video, and the like.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 performs frequency selection, the digital signal processor is configured to perform Fourier transform on frequency energy.

The video codec is configured to compress or decompress a digital video. The electronic device 100 may support one or more video codecs. In this way, the electronic device 100 may play back or record videos in a plurality of encoding formats, for example, moving picture experts group (moving picture experts group, MPEG) 1, MPEG 2, MPEG 3, and MPEG 4. In this embodiment of this application, sending a target frame and sending feedback information in response to the target frame may be respectively implemented by using a video encoder and a video decoder.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented by using the NPU, for example, image recognition, facial recognition, voice recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100 and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, by using the audio module 170, the speaker 170A, the phone receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode the audio signal. In some embodiments, the audio module 170 may be disposed in the processor 110, or some functional modules in the audio module 170 are disposed in the processor 110.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

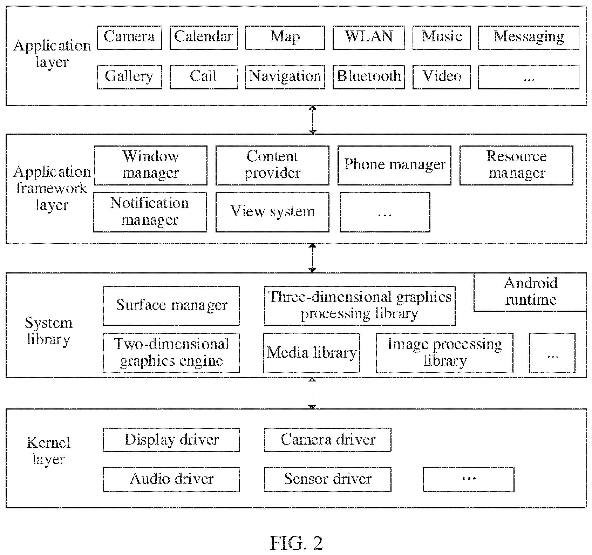

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The resource manager provides various resources such as a localized character string, an icon, a picture, a layout file, and a video file for the application.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The 2D graphics engine is a drawing engine for 2D drawing.

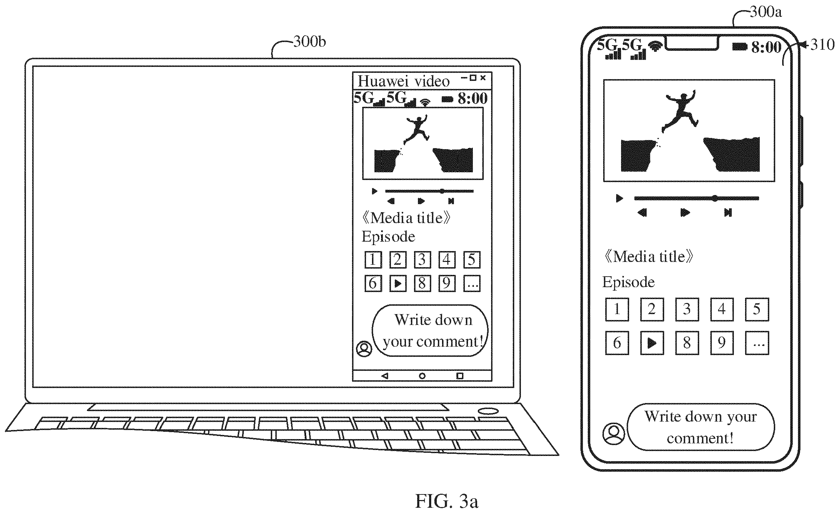

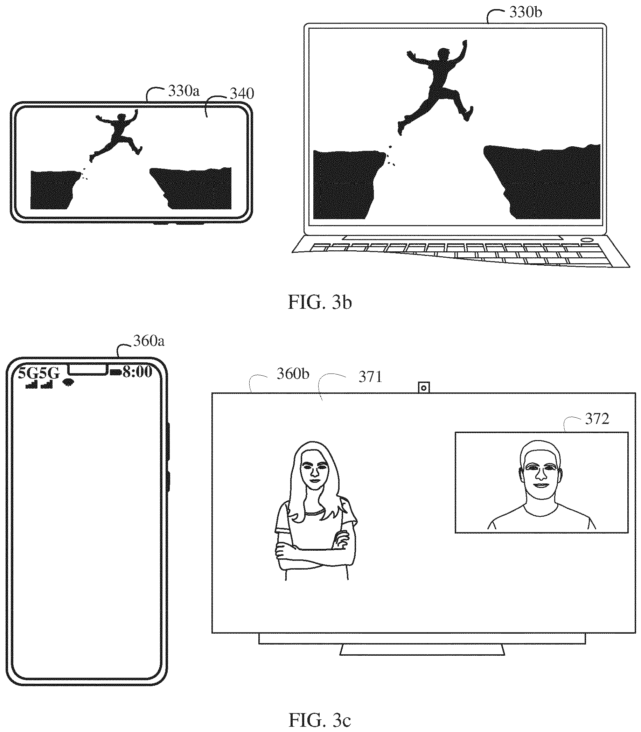

FIG. 3a, FIG. 3b, and FIG. 3c are schematic diagrams of scenarios to which embodiments of this application are applicable. In embodiments of this application, a first electronic device may perform projection to a second electronic device; or a first electronic device implements operations such as making a video call and photographing by using a camera of a second electronic device. The first electronic device and the second electronic device may be located in a same local area network, for example, establish a connection through Wi-Fi P2P; or the first electronic device and the second electronic device may establish a connection through Bluetooth, ultra-wideband (ultra-wideband, UWB), or a wired connection, or in another connection manner.

Refer to FIG. 3a. The first electronic device may be a mobile phone 300a, and the second electronic device may be a PC 300b. When the mobile phone 300a performs projection to the PC 300b, content of a display interface 310 of the mobile phone 300a is displayed in a window of a desktop of the PC. Optionally, a title bar part may be further included at an upper part of a display area. The title bar part may include an application name "Huawei Video", controls used to control minimization, maximization, and closing of interface display, and the like.

To ensure user experience, it is generally ensured that a picture in the mobile phone can be displayed on a screen of the PC in real time and smoothly. This requires a high demand on a projection delay.

Refer to FIG. 3b. The first electronic device may be a mobile phone 330a, and the second electronic device may be a PC 330b. When the mobile phone 330a performs projection to the PC 330b, a video picture 340 in the mobile phone is transmitted to the PC 330b for full-screen display. For example, a game picture is displayed in the mobile phone. When the mobile phone performs projection to the PC, the game picture is displayed in the PC in real time. In this case, a user expects that real-time performance of projecting the game picture to the PC for display is good, that is, expects that a projection delay is low.

Refer to FIG. 3c. The first electronic device may be a mobile phone 360a, and the second electronic device may be a smart screen 360b. When the mobile phone 360a establishes a connection to the smart screen 360b, the mobile phone 360a may perform operations such as making a video call and photographing by using a camera of the smart screen 360b.

For example, the mobile phone 360a makes a video call by using the camera of the smart screen 360b, and displays a picture of the video call on a screen of the smart screen 360b. For example, the smart screen displays, in full screen, a picture 371 photographed by a camera on a local end, and displays, in a form of a floating window, a display picture 372 on a peer end; or the smart screen displays video pictures on a local end and a peer end on split screens.

In the foregoing video transmission scenario, when a plurality of devices located in a same local area network simultaneously perform a high-throughput operation, for example, the plurality of devices simultaneously perform a projection operation, a frame freezing problem, a high delay problem, and the like may be caused. The second electronic device may reply with feedback information, to enable the first electronic device to adjust a transmission algorithm.

In a video signal transmission scenario in the wireless communication field, based on TCP/IP feedback information, an encoder (which may be understood as a component in the first electronic device in the foregoing scenario) may send data hierarchically after accessing a channel, and a decoder (which may be understood as a component in the second electronic device in the foregoing scenario) receives the data, and accesses the channel to feed back a receiving status after a specific delay.

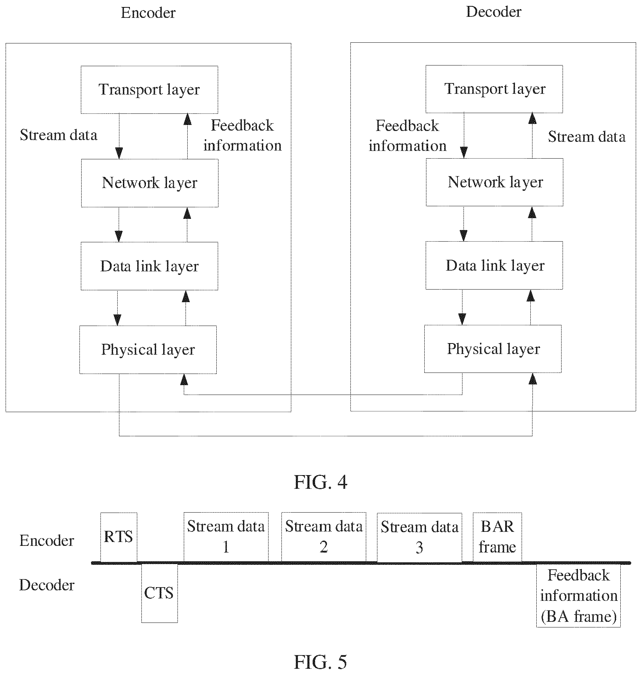

FIG. 4 is a schematic diagram of a TCP/IP communication protocol-based feedback manner according to this application.

Refer to FIG. 4. An encoder and a decoder each mainly include a transport layer, a network layer, a data link layer, a physical layer, and the like. Each layer provides a data communication service for an upper layer of the layer, and the transport layer serves an application layer. After obtaining a channel through contention, the encoder sends stream data. After receiving the stream data, the decoder performs upper-layer information processing, and delivers processed feedback information to a bottom layer on a channel obtained again through contention.

FIG. 5 is a schematic diagram of frame interaction between an encoder and a decoder according to this application. The frame interaction shown in the schematic diagram uses a feedback manner of block acknowledgement. In this manner, a table buffer status of a bitmap lookup table (bitmap lookup table, bitmap LUT) needs to be maintained, and it needs to be ensured that a receiving status of the data link layer on a decoding side matches a receiving status of the transport layer, to avoid a false feedback of the data link layer.

Refer to FIG. 5. First, the encoder may initiate an RTS/CTS or a NULL/ACK short frame transaction to protect a segment of TXOP sequence. Then, the encoder may continuously send a plurality of frames of stream data in a TXOP, set an acknowledgement policy field of a MAC frame of the data to block ack, and request feedback information (namely, a BA frame) of all the stream data by using a BAR frame after completing sending the plurality of frames of stream data. An entire interaction process may be performed in the same TXOP, thereby saving time for the encoder and the decoder to contend for a channel again. However, in this manner, the encoder can send, to the decoder only after successfully completing sending the plurality of frames of stream data, the BAR frame used to request the feedback information, and this manner belongs to a delayed acknowledgement manner. Consequently, the encoder cannot obtain a receiving status of the decoder in real time, and statuses of the encoder and the decoder cannot be synchronized.

Therefore, this application provides a video transmission method, to reduce a delay of replying with feedback information by a decoder, and synchronize statuses of an encoder and the decoder.

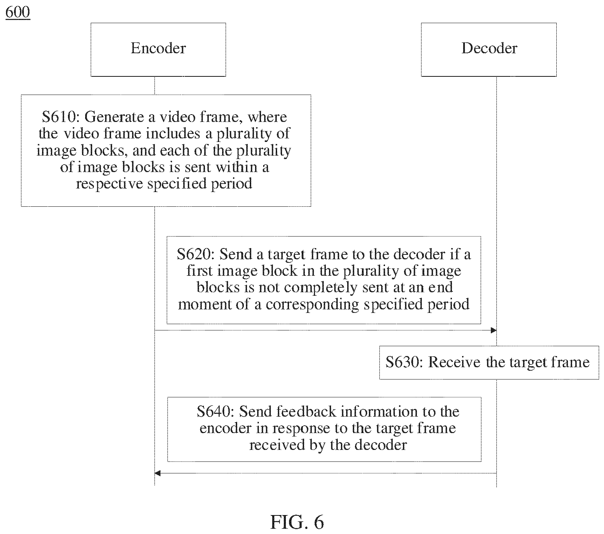

FIG. 6 is a schematic diagram of a video transmission method 600 according to an embodiment of this application. The method 600 may include steps S610 to S640. The method 600 may be implemented by an encoder and a decoder. Steps S610 and S620 may be implemented by the encoder, and steps S630 and S640 may be implemented by the decoder.

S610: Generate a video frame, where the video frame includes a plurality of image blocks, and each of the plurality of image blocks is sent within a respective specified period.

In this embodiment of this application, the video frame generated by the encoder may be divided into a plurality of image blocks. Optionally, in some embodiments, the plurality of image blocks may include a tile (tile) or a slice segment (slice segment, SS) (which may be referred to as a slice for short). A rectangular tile may be obtained by dividing the video frame horizontally or vertically, and a strip-shaped slice segment may be obtained by dividing the video frame irregularly.

It should be noted that the video frame in this embodiment of this application may be evenly divided, or may not be evenly divided. This is not limited.

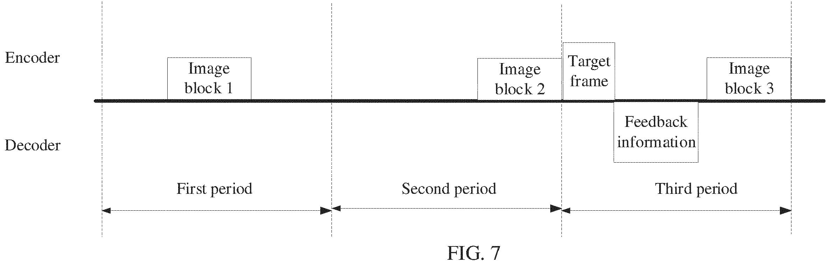

In addition, that each of the plurality of image blocks is sent within the respective specified period may be understood as follows: For each of the plurality of image blocks included in the video frame, the encoder configures a period, and the encoder may send the image block to the decoder within the configured corresponding period. FIG. 7 is a schematic diagram of frame interaction between an encoder and a decoder according to an embodiment of this application.

Refer to FIG. 7. The video frame includes three image blocks: an image block 1, an image block 2, and an image block 3, and the encoder respectively configures corresponding periods for the three image blocks. For example, the encoder configures a first period for the image block 1, configures a second period for the image block 2, and configures a third period for the image block 3. In this case, the encoder may send the image block 1 within the first period, send the image block 2 within the second period, and send the image block 3 within the third period.

It should be understood that a quantity of image blocks included in the video frame is merely an example for description, may alternatively be another value, and should not be construed as a particular limitation on this application.

S620: Send a target frame to the decoder if a first image block in the plurality of image blocks is not completely sent at an end moment of a corresponding specified period, where the target frame is used to request feedback information from the decoder.

In this embodiment of this application, the encoder sends, to the decoder, the target frame used to request the feedback information if the first image block in the plurality of image blocks is not completely sent at the end moment of the corresponding specified period. Still refer to FIG. 7. The video frame includes three image blocks: the image block 1, the image block 2, and the image block 3. If it assumed that the image block 1 is completely sent to the decoder at an end moment of the first period, the encoder may not send the target frame to the decoder. If it assumed that the image block 2 is not completely sent to the decoder at an end moment of the second period, the encoder may send the target frame to the decoder at the end moment of the second period.

It should be noted that in this embodiment of this application, that the first image block is not completely sent at the end moment of the corresponding specified period may be understood as follows: Some data in the first image block is not sent to the decoder until the end moment of the specified period corresponding to the first image block.

In addition, in this embodiment of this application, the encoder sends the target frame to the decoder if the first image block in the plurality of image blocks is not completely sent at the end moment of the corresponding specified period. In some possible embodiments, a moment at which the encoder sends the target frame to the decoder may be delayed. This is not limited.

S630: Receive the target frame.

S640: Send the feedback information to the encoder in response to the target frame received by the decoder.

In this embodiment of this application, after the decoder receives the target frame used to request the feedback information from the decoder, the decoder sends the feedback information to the encoder in response to the received target frame.

According to the solution provided in this application, when determining that the first image block in the plurality of image blocks included in the video frame is not completely sent at the end moment of the corresponding specified period, the encoder sends, to the decoder, the target frame used to request the feedback information, and the decoder sends the feedback information to the encoder in response to the received target frame. Because when determining that the first image block is not completely sent at the end moment of the corresponding specified period, the encoder actively sends the target frame to the decoder to request the decoder to send the feedback information, the encoder may send, to the decoder before the plurality of video frames are completely sent, a BAR frame used to request the feedback information, so that a delay of replying with the feedback information by the decoder can be reduced. Therefore, the encoder can synchronize statuses of the encoder and the decoder or learn of a synchronization status of the decoder for the received video frame based on the feedback information received in real time.

It is pointed in the foregoing step S640 that the decoder sends the feedback information to the encoder in response to the target frame received by the decoder. Content represented by the feedback information is related to content indicated by the target frame. For details, refer to the following descriptions.

Optionally, in some embodiments, the target frame is a probe frame, the probe frame indicates the decoder to feed back a status of an image block of the video frame received by the decoder, and the feedback information represents a status of the video frame received by the decoder; or
the target frame is a synchronization frame, the synchronization frame indicates the decoder to perform synchronization processing on the received video frame, and the feedback information represents a synchronization status of the decoder for the received video frame.

In this embodiment of this application, if the target frame is the probe frame indicating the decoder to feed back the status of the image block of the video frame received by the decoder, the feedback information represents the status of the video frame received by the decoder. The example in FIG. 7 in which the video frame includes three image blocks is still used. If it is assumed that the image block 2 is not completely sent to the decoder at the end moment of the second period, the encoder sends the probe frame to the decoder, to request, from the decoder, a status of the video frame received by the decoder at this time. After receiving the probe frame, the decoder sends, to the encoder in response to the received probe frame, the status of the video frame received at this time. For example, if the decoder receives some data in the image block 2 at a current moment, the decoder sends, to the encoder, a status of the data that has been received at the current moment, so that the encoder synchronizes the status with that of the decoder. The encoder no long sends data that is not sent in the image block 2.

If the target frame is the synchronization frame indicating the decoder to perform synchronization processing on the received video frame, the feedback information represents the synchronization status of the decoder for the received video frame. The example in FIG. 7 in which the video frame includes three image blocks is still used. If it is assumed that the image block 2 is not completely sent to the decoder at the end moment of the second period, the encoder sends the synchronization frame to the decoder, to notify the decoder of data, in the image block 2, that has been sent at a current moment, so that the decoder synchronizes the status with that of the encoder. When receiving the synchronization frame sent by the encoder, the decoder may send, to the encoder, information indicating acknowledgement of receiving the synchronization frame. For example, if the decoder receives, at the current moment, the synchronization frame sent by the encoder, the decoder may send, to the encoder, feedback information indicating that the synchronization frame has been received, where the feedback information represents the synchronization status of the decoder for the received video frame.

According to the solution provided in this application, the content indicated by the target frame sent by the encoder to the decoder is different, and the content represented by the feedback information sent by the decoder to the encoder is different. Specifically, if the target frame is the probe frame indicating the decoder to feed back the status of the image block of the video frame received by the decoder, the feedback information represents the status of the video frame received by the decoder; or if the target frame is the synchronization frame indicating the decoder to perform synchronization processing on the received video frame, the feedback information represents the synchronization status of the decoder for the received video frame. Regardless of the content indicated by the target frame and the content represented by the feedback information, an objective is to synchronize statuses of the video frame on two sides, namely, the encoder and the decoder. A difference lies in that an action of synchronizing the statuses of the video frame on the two sides is performed by different entities (to be specific, if the target frame is the probe frame, the encoder synchronizes the statuses of the video frame on the two sides; or if the target frame is the synchronization frame, the decoder synchronizes the statuses of the video frame on the two sides). In this way, flexibility of synchronizing the statuses of the video frame on the two sides, namely, the encoder and the decoder, may be improved.

In some possible implementations, the target frame may alternatively include the probe frame and the synchronization frame, so that the encoder can request the status of the video frame received by the decoder, and can also transfer status information of a sent video frame to the decoder. In this case, the encoder may estimate, based on a current channel status, total duration for sending the two frames, to avoid occupying duration of a next period.

Optionally, in some embodiments, the target frame is a MAC frame.

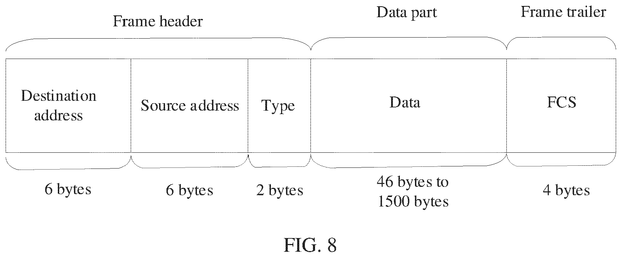

The target frame in this embodiment of this application may be the MAC frame. FIG. 8 is a schematic diagram of a MAC frame format according to an embodiment of this application. Refer to FIG. 8. The MAC frame includes three parts: a frame header, a data part, and a frame trailer. The frame header and the frame trailer may include address information and the like, and the data part may include to-be-transmitted data.

Specifically, the frame header of the MAC frame may include three fields. The first two fields are respectively a destination address field and a source address field whose lengths are both 6 bytes, the destination address field includes destination MAC address information, and the source address field includes source MAC address information. The third field is a 2-byte type field, and includes information that may identify a protocol used at an upper layer, so that a receive end submits the data part of the received MAC frame to the protocol at the upper layer.

The data part of the MAC frame includes a field whose length ranges from 46 bytes to 1500 bytes, and includes data transmitted from a network layer.

A frame trailer of the MAC frame also includes a field whose length is 4 bytes, and includes a frame check sequence (frame check sequence, FCS).

It should be noted that the target frame in this embodiment of this application may be another frame in addition to the MAC frame shown in the foregoing example. A frame can be applied to this application provided that the frame can indicate the decoder to feed back the status of the image block of the video frame received by the decoder or indicate the decoder to perform synchronization processing on the received video frame.

Optionally, in some embodiments, when the target frame is the probe frame, the target frame is any one of a control frame, a data frame, or a management frame; or
when the target frame is the synchronization frame, the target frame is one of a data frame or a management frame.

In this embodiment of this application, the target frame may include the control frame, the data frame, or the management frame. The control frame may assist in information transferring, and cannot carry service data. The data frame and the management frame may carry service data.

In this embodiment of this application, target frames indicating different content include different formats.

For example, if the target frame is the probe frame, because the probe frame indicates the decoder to feed back the status of the image block of the video frame received by the decoder, in other words, the probe frame may not carry a status of an image block of a video frame that has been sent currently, the target frame may be any one of the control frame, the data frame, or the management frame, that is, the target frame may be the control frame, the data frame, or the management frame.

If the target frame is the synchronization frame, because the synchronization frame indicates the decoder to perform synchronization processing on the received video frame, in other words, the synchronization frame needs to carry a status of an image block of a video frame that has been sent currently, the target frame may be one of the data frame or the management frame, that is, the target frame may be the data frame or the management frame.

According to the solution provided in this application, a specific format of the target frame is related to the content indicated by the target frame. If the target frame is the probe frame indicating the decoder to feed back the status of the image block of the video frame received by the decoder, the target frame may be any one of the control frame, the data frame, or the management frame; or if the target frame is the synchronization frame indicating the decoder to perform synchronization processing on the received video frame, the target frame may be one of the data frame or the management frame. This helps synchronize the statuses of the video frame on the two sides, namely, the encoder and the decoder.

Optionally, in some embodiments, the control frame includes a short probe frame;
the data frame includes a quality of service (quality of service, QoS) null frame or a QoS data frame; and
the management frame includes an action no acknowledgement frame or an acknowledgement frame.

In this embodiment of this application, the control frame may include the short probe frame, the data frame may include the QoS null frame or the QoS data frame, and the management frame may include the action no acknowledgement frame or the acknowledgement frame. For different types of frames included in the plurality of formats, when the content indicated by the target frame is different, types of frames included in the target frame are different.

For example, if the target frame is the probe frame indicating the decoder to feed back the status of the image block of the video frame received by the decoder, the target frame may be any one of the control frame, the data frame, or the management frame. Specifically, if the target frame is the control frame, the target frame may be the short probe frame; if the target frame is the data frame, the target frame may be the QoS null frame; or if the target frame is the management frame, the target frame may be the action no acknowledgement frame.

If the target frame is the synchronization frame indicating the decoder to perform synchronization processing on the received video frame, the target frame may be one of the data frame or the management frame. Specifically, if the target frame is the data frame, the target frame may be the QoS data frame; or if the target frame is the management frame, the target frame may be the acknowledgement frame.

The foregoing describes frame types when the target frame indicates different content. For the target frame indicating different content, when the target frame is the MAC frame, corresponding indication is performed by using the frame header or the data part of the MAC frame. For details, refer to the following descriptions.

**Case 1: The target frame is the probe frame.**

Optionally, in some embodiments, when the target frame is the probe frame, the frame header of the MAC frame carries a private value, and the private value indicates the encoder to request the feedback information from the decoder.

Optionally, in some embodiments, when the target frame is the control frame, the target frame is the control frame, and a control field of a frame header of the control frame is set to the private value;
the target frame is the data frame, and a high-throughput control (high-throughput control, HTC) field of a frame header of the data frame is set to the private value; or
the target frame is the management frame, and an HTC field of a frame header of the management frame is set to the private value, or
a first field in a payload of the management frame is set to the private value.

In this embodiment of this application, if the target frame is the probe frame indicating the decoder to feed back the status of the image block of the video frame received by the decoder, when the target frame is the MAC frame, the frame header of the MAC frame may carry the private value, and the private value indicates the encoder to request the feedback information from the decoder.

The following separately describes that when the target frame is in different frame formats, a field of a frame header corresponding to the target frame is set to the private value.

### (1) The target frame is the control frame.

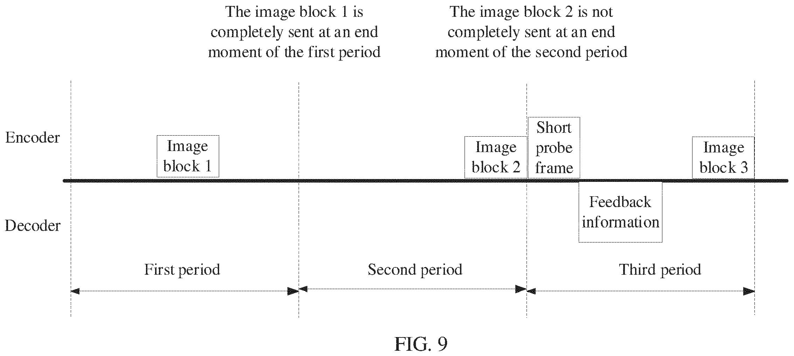

In this embodiment of this application, when the target frame is the control frame, the control field of the frame header of the control frame is set to the private value. FIG. 9 is another schematic diagram of frame interaction between an encoder and a decoder according to an embodiment of this application.

Refer to FIG. 9. It can be learned that an image block 2 is not completely sent to the decoder at an end moment of a second period. In this case, the encoder sends the short probe frame to the decoder, and after receiving the short probe frame, the decoder sends feedback information to the encoder in response to the received short probe frame, where the feedback information represents the status of the video frame received by the decoder.

In the foregoing example in FIG. 9, delay duration for the encoder to receive the feedback information sent by the decoder includes: two short interframe spaces (short interframe spaces, SIFSs)+duration for sending the short probe frame.

If the video frame sent by the encoder to the decoder uses an orthogonal frequency division multiplexing (orthogonal frequency division multiplexing, OFDM) frame, the SIFS is 16 µs (where 16 µs includes a physical layer receiving/transmitting delay 15.6 µs plus a scheduling delay 0.4 µs). If a frame length of the MAC frame is fixed to 24 bytes, when a rate is 11a/g 24 m, the duration for sending the short probe frame is 32 µs. Therefore, the delay duration for the encoder to receive the feedback information sent by the decoder is 2*16+32=64 µs.

In this embodiment of this application, the encoder may use the control frame as the probe frame to request the feedback information. Specifically, the control field of the frame header of the control frame may be set to the private value. For example, a combination of three bits: a multi-thread identifier (multi-thread identifier, Multi-TID), a compressed bitmap (compressed bitmap), and groupcast with retries (groupcast with retries, GCR) is set to a reserved (reserved) value, as shown in Table 1. When the decoder obtains, through parsing, that the control field of the frame header of the control frame is set to the reserved value (namely, the private value in this application), the decoder may directly reply with the feedback information.

**Table 1**

| Subfield value of the Multi-TID | Subfield value of the compressed bitmap | Subfield value of the GCR | Block acknowledgement request frame variant (blockackreq frame variant) |
|---|---|---|---|
| 0 | 0 | 0 | Basic block acknowledgement request (basic blockackreq) |
| 0 | 1 | 0 | Compressed block acknowledgement request (compressed blockackreq) |
| 1 | 0 | 0 | Extended compressed block acknowledgement request (extended compressed blockackreq) |
| 1 | 1 | 0 | Multi-thread identifier block acknowledgement request (Multi-TID blockackreq) |
| 0 | 0 | 1 | Reserved (reserved) value |
| 0 | 1 | 1 | Groupcast with retries block acknowledgement request (GCR blockackreq) |
| 1 | 0 | 1 | Reserved (reserved) value |
| 1 | 1 | 1 | Reserved (reserved) value |

Refer to Table 1. It can be learned that, when the subfield values of the three bits: the Multi-TID, the compressed bitmap, and the GCR are respectively 001, 101, or 111, the block acknowledgement request frame variant may be set to the reserved value, in other words, the control field of the frame header of the control frame is set to the reserved value.

### (2) The target frame is the data frame.

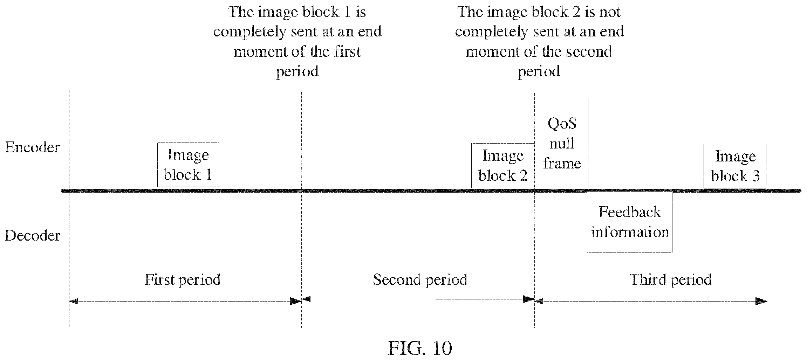

In this embodiment of this application, when the target frame is the data frame, the HTC field of the frame header of the data frame is set to the private value. FIG. 10 is still another schematic diagram of frame interaction between an encoder and a decoder according to an embodiment of this application.

Refer to FIG. 10. It can be learned that an image block 2 is not completely sent to the decoder at an end moment of a second period. In this case, the encoder sends the QoS null frame to the decoder, and after receiving the QoS null frame, the decoder sends feedback information to the encoder in response to the received QoS null frame, where the feedback information represents the status of the video frame received by the decoder.

In the foregoing example in FIG. 10, delay duration for the encoder to receive the feedback information sent by the decoder includes: two short interframe spaces (short interframe spaces, SIFSs)+duration for sending the QoS null frame.

If the video frame sent by the encoder to the decoder uses an OFDM frame, the SIFS is 16 µs. If a frame length of the MAC frame is fixed to 34 bytes, when a rate is 11a/g 24 m, the duration for sending the QoS null frame is 36 µs. Therefore, the delay duration for the encoder to receive the feedback information sent by the decoder is 2*16+36=68 µs.

In this embodiment of this application, the encoder may use the QoS null frame as the probe frame to request the feedback information. Specifically, an HTC field of a frame header of the QoS null frame may be set to the private value. For example, control identities (identities, IDs) 7 to 14 in an A-control field in a high efficiency (high efficiency, HE) throughput format is set to a reserved value, as shown in Table 2 and Table 3. After receiving the QoS null frame with a specified HTC field, the decoder may directly reply with the feedback information.

**Table 2**

| Variant | B0 | B1 | B2 to B29 | B30 | B31 |
|---|---|---|---|---|---|
| HT | 0 | HT control center | | AC constraint (constraint) | RDG/more PPDU |
| VHT | 1 | 0 | VHT control center | AC constraint (constraint) | RDG/more PPDU |
| HE | 1 | 1 | A-control (A-control) | | |

**Table 3**

| Control ID value | Meaning (meaning) | Length of a control information subfield (length of a control information subfield) | Content of the control information subfield (content of the control information subfield) |
|---|---|---|---|
| 0 | Triggered response scheduling (triggered response scheduling, TRS) | 26 | See 9.2.4.6a.1 (TRS control) |
| 1 | Operating mode (operating mode, OS) | 12 | See 9.2.4.6a.2 (OM control) |
| 2 | High efficiency throughput link adaptation (HE link adaptation, HLA) | 26 | See 9.2.4.6a.3 (HLA control) |
| 3 | Buffer status report (buffer status report, BSR) | 26 | See 9.2.4.6a.4 (BSR control) |
| 4 | UL power headroom (UL power headroom, UPH) | 8 | See 9.2.4.6a.5 (UPH control) |
| 5 | Bandwidth query report (bandwidth query report, BQR) | 10 | See 9.2.4.6a.6 (BQR control) |
| 6 | Command and status (command and status, CAS) | 8 | See 9.2.4.6a.7 (CAS control) |
| 7 to 14 | Reserved (reserved) value | | |
| 15 | Ones need expansion surely (ones need expansion surely, ONES). | 26 | Set to all 1s (Set to all 1s) |

Refer to Table 2 and Table 3. It can be learned that, when the variant is HE, B2 to B31 are A-control fields, and control ID values 7 to 14 of the A-control field may be set to the reserved value.

### (3) The target frame is the management frame.

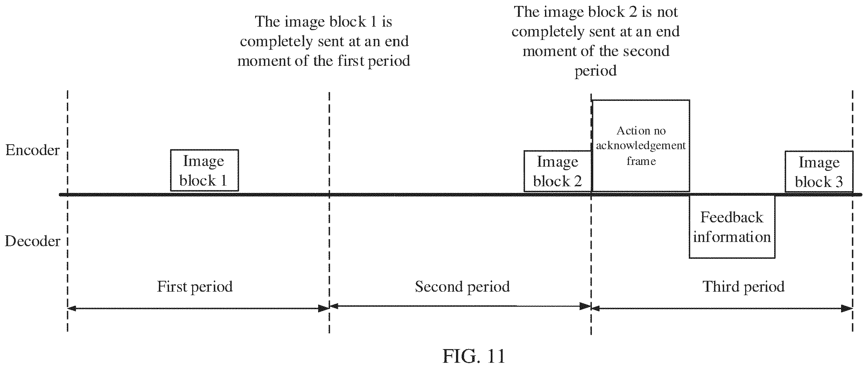

In this embodiment of this application, when the target frame is the management frame, the HTC field of the frame header of the management frame is set to the private value, or the first field in the payload of the management frame is set to the private value. FIG. 11 is yet another schematic diagram of frame interaction between an encoder and a decoder according to an embodiment of this application.

Refer to FIG. 11. It can be learned that an image block 2 is not completely sent to the decoder at an end moment of a second period. In this case, the encoder sends the action no acknowledgement (action no ack) frame to the decoder. After receiving an action no acknowledgement, the decoder sends feedback information to the encoder in response to the received action no acknowledgement frame, where the feedback information represents the status of the video frame received by the decoder.

In the foregoing example in FIG. 11, delay duration for the encoder to receive the feedback information sent by the decoder includes: two short interframe spaces (short interframe spaces, SIFSs)+duration for sending the action no acknowledgement frame.

If the video frame sent by the encoder to the decoder uses an OFDM frame, the SIFS is 16 µs. If a frame length of the MAC frame is fixed to 29 bytes, when a rate is 11a/g 24 m, the duration for sending the action no acknowledgement frame is 32 µs. Therefore, the delay duration for the encoder to receive the feedback information sent by the decoder is 2*16+32=64 µs.

In this embodiment of this application, the encoder may use the action no acknowledgement frame as the probe frame to request the feedback information. Specifically, an HTC field of a frame header of the action no acknowledgement frame may be set to the private value, or a first field in a payload of the action no acknowledgement frame may be set to the private value.

If the HTC field of the frame header of the action no acknowledgement frame is set to the private value, control ID values 7 to 14 of an A-control (A-control) field in an HE format may be set to a reserved value. For details, refer to the content shown in Table 2 and Table 3.

If the first field in the payload of the action no acknowledgement frame is set to the private value, fields (or referred to as codes) 21 to 125 in the payload of the action no acknowledgement frame may be set to the private value, as shown in Table 4.

**Table 4**

| Code (code) | Meaning (meaning) | See subclause (see subclause) | Robust (robust) | Group addressed privacy (Group addressed privacy) |
|---|---|---|---|---|
| 0 to 21 | Used in a Wi-Fi protocol | 9.6.2-9.6.23 | yes/no/- | yes/no/- |
| 21 to 125 | Reserved (reserved) value | - | - | - |
| 126 | Vendor-specific protected (vendor-specific protected) | 9.6.6 | yes | no |
| 127 | Vendor-specific (vendor-specific) | 9.6.6 | no | no |
| 128 to 255 | Error (error) | - | - | - |

According to the solution provided in this application, when the target frame is the probe frame, the frame header of the MAC frame carries the private value indicating the encoder to request the feedback information from the decoder. After the decoder receives the probe frame, because the probe frame carries the private value indicating the decoder to feed back information, the decoder may immediately send, to the encoder, the feedback information representing the status of the video frame received by the decoder, and the encoder may synchronize the status with that of the decoder based on the feedback information, to ensure a synchronization effect of image transmission.

**Case 2: The target frame is the synchronization frame.**

Optionally, in some embodiments, when the target frame is the synchronization frame, the data part of the MAC frame carries indication information, and the indication information indicates the decoder to perform synchronization processing on the received video frame.

As mentioned above, the MAC frame includes three parts: the frame header, the data part, and the frame trailer. When the target frame is the synchronization frame, the frame header of the MAC frame does not need to carry the private value, and the data part of the MAC frame carries the indication information, where the indication information indicates the decoder to perform synchronization processing on the received video frame.

### (1) The target frame is the data frame.

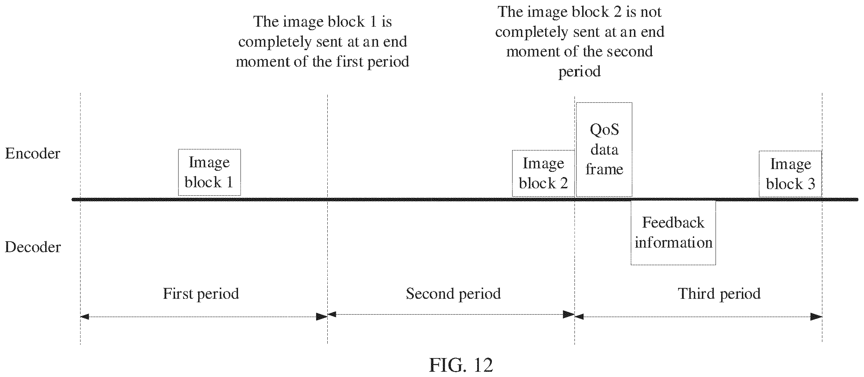

In this embodiment of this application, the encoder may use the QoS data frame as the synchronization frame to transmit the status of the video frame sent by the encoder. FIG. 12 is yet another schematic diagram of frame interaction between an encoder and a decoder according to an embodiment of this application.

Refer to FIG. 12. It can be learned that an image block 2 is not completely sent to the decoder at an end moment of a second period. In this case, the encoder sends the QoS data frame to the decoder, and a data part of the QoS data frame carries indication information (where the indication information may include a stream number of the image block 2 that has been sent by the encoder). After receiving the QoS data frame, the decoder may synchronize the status with that of the encoder based on the received QoS data frame. In addition, the decoder may send feedback information to the encoder in response to the received QoS data frame, where the feedback information represents the synchronization status of the decoder for the received video frame.

### (2) The target frame is the management frame.

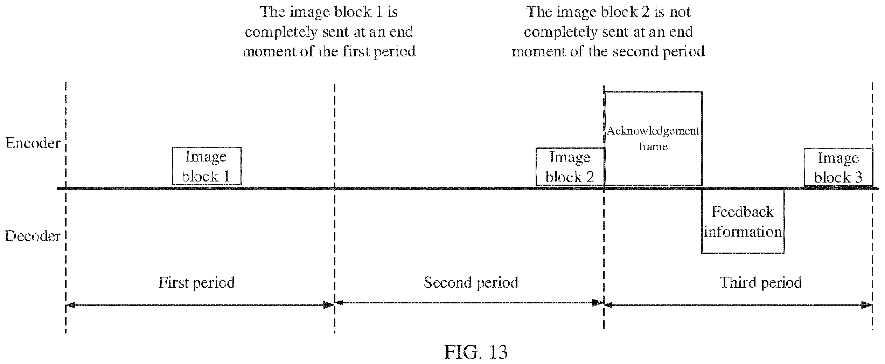

In this embodiment of this application, the encoder may use the acknowledgement frame as the synchronization frame to transmit the status of the video frame sent by the encoder. FIG. 13 is yet another schematic diagram of frame interaction between an encoder and a decoder according to an embodiment of this application.

Refer to FIG. 13. It can be learned that an image block 2 is not completely sent to the decoder at an end moment of a second period. In this case, the encoder sends the acknowledgement frame to the decoder, and a data part of the acknowledgement frame carries indication information (where the indication information may include a stream number of the image block 2 that has been sent by the encoder). After receiving the acknowledgement frame, the decoder may synchronize the status with that of the encoder based on the received acknowledgement frame. In addition, the decoder may send feedback information to the encoder in response to the received acknowledgement frame, where the feedback information represents the synchronization status of the decoder for the received video frame.

According to the solution provided in this application, when the target frame is the synchronization frame, the data part of the MAC frame carries the indication information indicating the decoder to perform synchronization processing on the received video frame. After the decoder receives the synchronization frame, because the synchronization frame carries the indication information indicating the decoder to perform synchronization processing on the received video frame, the decoder may synchronize the status with that of the encoder based on the synchronization frame, to ensure a synchronization effect of image transmission.

The foregoing describes related content when the target frame is the probe frame or the synchronization frame. In some embodiments, the encoder may resend the target frame to the decoder. For details, refer to the following descriptions.

Optionally, in some embodiments, if the encoder does not receive the feedback information, the method further includes: The encoder resends the target frame to the decoder.

In this embodiment of this application, if the first image block is not completely sent at the end moment of the corresponding specified period, the encoder may send, to the decoder, the target frame used to request the feedback information. After receiving the target frame, the decoder sends the feedback information to the encoder in response to the received target frame. In some possible embodiments, the encoder does not receive the feedback information sent by the decoder. For example, the encoder does not receive the feedback information due to channel congestion or another reason. In this case, the encoder may resend, to the decoder, the target frame used to request the feedback information. After receiving the target frame again, the decoder may send the feedback information to the encoder again.

It may be understood that content represented by the feedback information sent by the encoder again is consistent with content represented by the feedback information (which may be understood as the feedback information sent by the decoder to the encoder in response to the received target frame (where the target frame is the target frame sent by the encoder to the decoder when the first image block is not completely sent at the end moment of the corresponding specified period)) sent by the encoder for the first time. When the first image block is not completely sent at the end moment of the corresponding specified period, the encoder no longer sends data that is not sent in the first image block, and regardless of whether the target frame is the probe frame or the synchronization frame, the feedback information represents a status or a synchronization status of the video frame that has been received by the decoder. Therefore, the content represented by the feedback information sent by the encoder again is consistent with the content represented by the feedback information sent by the encoder for the first time.

According to the solution provided in this application, when the encoder does not receive the feedback information sent by the decoder, the encoder may resend, to the decoder, the target frame used to request the feedback information, to expect to successfully receive the feedback information sent by the decoder, so that the encoder synchronizes the statuses of the encoder and the decoder or learns of the synchronization status of the decoder for the received video frame based on the feedback information.

Optionally, in some embodiments, a rate at which the encoder resends the target frame to the decoder is less than a first rate, and the first rate is a rate at which the encoder sends the target frame to the decoder when the first image block is not completely sent at the end moment of the corresponding specified period.

In this embodiment of this application, the rate at which the encoder resends the target frame to the decoder is less than the first rate, and the first rate is the rate at which the encoder sends the target frame to the decoder when the first image block is not completely sent at the end moment of the corresponding specified period. For example, if the rate at which the encoder sends the target frame to the decoder when the first image block is not completely sent at the end moment of the corresponding specified period is 12 Mbps, the rate at which the encoder resends the target frame to the decoder may be 6 Mbps.

It should be noted that a lower rate at which the encoder sends the target frame to the decoder indicates a higher probability that the decoder successfully receives the target frame. Therefore, in this application, the rate at which the encoder resends the target frame to the decoder is reduced.

It should be understood that the foregoing values are merely examples for description. The rate at which the encoder sends the target frame to the decoder may alternatively be another value, and should not constitute particular limitation to this application.

According to the solution provided in this application, the rate at which the encoder resends the target frame to the decoder is less than the first rate, so that a probability that the encoder successfully receives the feedback information can be increased. Further, the encoder may synchronize the statuses of the encoder and the decoder or learn of the synchronization status of the decoder for the received video frame based on the feedback information received in real time.

Optionally, in some embodiments, the rate at which the encoder sends the target frame to the decoder is set to at least one of the following:
an expected rate collected by a system, a rate at which the target frame is successfully sent recently, or a mapping value of the rate at which the target frame is successfully sent recently.

In this embodiment of this application, the rate at which the encoder sends the target frame to the decoder may be set based on the following.

### (1) Expected rate collected by the system

If the expected rate collected by the system based on rates at which the target frame is sent for a plurality of times is v1, v1 may be set as the rate at which the encoder sends the target frames to the decoder. For example, if the expected rate collected by the system based on the rates at which the target frame is sent for a plurality of times is 12 Mbps, the rate at which the encoder sends the target frame to the decoder may be set to 12 Mbps.

### (2) Rate at which the target frame is successfully sent recently

If the rate at which the encoder recently successfully sends the target frame is v2, v2 may be set as the rate at which the encoder sends the target frame. For example, if the rate at which the encoder recently successfully sends the target frame is 9 Mbps, the rate at which the encoder recently successfully sends the target frame may be set to 9 Mbps.

### (3) Mapping value of the rate at which the target frame is successfully sent recently

If the rate at which the encoder recently successfully sends the target frame is v2, and a rate mapping value corresponding to the rate v2 in another protocol format is v3, v3 may be set as the rate at which the encoder recently successfully sends the target frame. If a rate at which the encoder recently successfully sends the target frame in a protocol format (for example, the HE format) is 9 Mbps, and a rate mapping value corresponding to the rate 9 Mbps in another protocol format (for example, a non-high throughput (non-high throughput, non-ht) format) may be 6 Mbps, the rate at which the encoder recently successfully sends the target frame may be set to 6 Mbps.

It is pointed in the foregoing step S640 that the decoder sends the feedback information to the encoder in response to the target frame received by the decoder. A process of generating the feedback information may be implemented at a layer of the decoder. For details, refer to the following descriptions.

Optionally, in some embodiments, that the decoder sends the feedback information to the encoder includes: A data link layer in the decoder generates the feedback information based on the target frame; and
the decoder sends the feedback information to the encoder.

In this embodiment of this application, after the decoder receives the target frame sent by the encoder, in response to the target frame, the data link layer in the decoder generates the feedback information based on the target frame, and sends the feedback information to the encoder by using a physical layer.

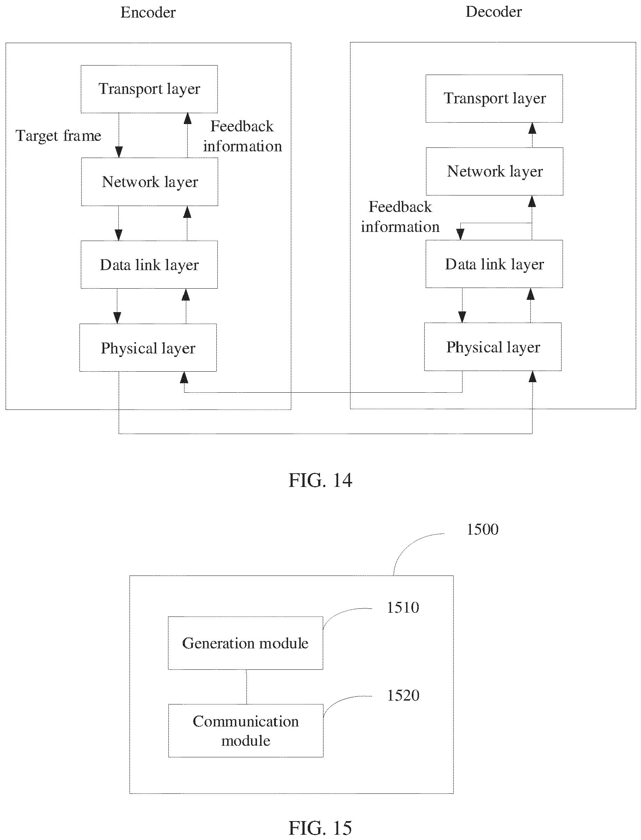

FIG. 14 is a schematic diagram of another TCP/IP communication protocol-based feedback manner according to an embodiment of this application. Refer to FIG. 14. After obtaining a channel through contention, an encoder sends a target frame to a decoder. After receiving the target frame by using a physical layer, a data link layer in the decoder generates feedback information based on the target frame, and sends the feedback information to the encoder by using the physical layer. Because the feedback information is generated at the data link layer in the decoder and sent to the encoder by using the physical layer, a delay of transmitting the feedback information by using a bidirectional network layer and a bidirectional transport layer can be reduced.

It should be understood that, although the feedback information is generated at the data link layer in the decoder, for the received target frame, the data link layer in the decoder may still transmit the target frame to a network layer, and the network layer transmits the target frame to a transport layer, so that the transport layer in the decoder performs processing such as a video display service and sound signal transmission.

According to the solution provided in this application, the data link layer in the decoder generates the feedback information based on the received target frame, and sends the feedback information to the decoder. Because the feedback information is generated at the data link layer in the decoder and sent to the encoder by using the physical layer, the delay of transmitting the feedback information by using the bidirectional network layer and the bidirectional transport layer can be reduced.

Optionally, in some embodiments, a rate at which the decoder sends the feedback information to the encoder is set to at least one of the following:
an expected rate collected by a system, a rate at which a video frame sent by the encoder is successfully received recently, or a mapping value of the rate at which the video frame sent by the encoder is successfully received recently.

In this embodiment of this application, the rate at which the decoder sends the feedback information to the encoder may be set based on the following.

### (1) Expected rate collected by the system

If the expected rate collected by the system based on rates at which the feedback information is sent for a plurality of times is v1', v1' may be set as the rate at which the decoder sends the feedback information to the encoder. For example, if the expected rate collected by the system based on the rates at which the feedback information is sent for a plurality of times is 12 Mbps, the rate at which the decoder sends the feedback information to the encoder may be set to 12 Mbps.

### (2) Rate at which the video frame sent by the encoder is successfully received recently

If the rate at which the decoder recently successfully receives the video frame sent by the encoder is v2', v2' may be set as the rate at which the decoder sends the feedback information to the encoder. For example, if the rate at which the decoder recently successfully receives the video frame sent by the encoder is 9 Mbps, the rate at which the decoder sends the feedback information to the encoder may be set to 9 Mbps.

### (3) Mapping value of the rate at which the video frame sent by the encoder is successfully received recently

If the rate at which the decoder recently successfully receives the video frame sent by the encoder is v2', and a rate mapping value corresponding to the rate v2' in another protocol format is v3', v3' may be set as the rate at which the decoder sends the feedback information to the encoder. If a rate at which the decoder recently successfully receives, in a protocol format (for example, an HE format), the video frame sent by the encoder is 9 Mbps, and a rate mapping value corresponding to the rate 9 Mbps in another protocol format (for example, a non-ht format) may be 6 Mbps, the rate at which the decoder sends the feedback information to the encoder may be set to 6 Mbps.

It may be understood that, to implement the foregoing functions, an electronic device includes corresponding hardware and/or software modules for performing the functions. In combination with the algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, each functional module may be divided corresponding to each function, or two or more functions may be integrated into one processing module. The integrated module may be implemented in a form of hardware. It should be noted that, in embodiments, division into the modules is an example, and is merely logical function division. During actual implementation, another division manner may be used.

When each functional module is divided corresponding to each function, FIG. 15 is a schematic diagram of a possible composition of an electronic device 1500 in the foregoing embodiments. As shown in FIG. 15, the electronic device 1500 may include a generation module 1510 and a communication module 1520.

The generation module 1510 may be configured to support the electronic device 1500 in performing step S610 or the like, and/or another process of the technology described in this specification.

The communication module 1520 may be configured to support the electronic device 1500 in performing step S620 or the like, and/or another process of the technology described in this specification.

It should be noted that all related content of the steps in the foregoing method embodiments may be cited in function descriptions of corresponding functional modules. Details are not described herein again.

The electronic device provided in this embodiment is configured to perform the foregoing method in this application, and therefore can achieve a same effect as the foregoing implementation method.

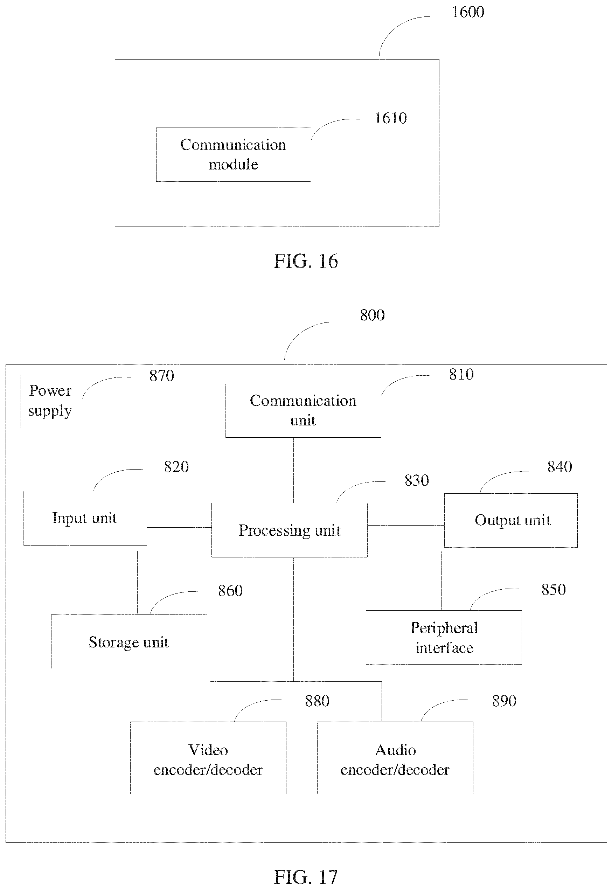

FIG. 16 is a schematic diagram of a possible composition of an electronic device 1600 in the foregoing embodiments. As shown in FIG. 16, the electronic device 1600 may include a communication module 1610.

The communication module 1610 may be configured to support the electronic device 1600 in performing step S630, step S640, or the like, and/or another process of the technology described in this specification.

It should be noted that all related content of the steps in the foregoing method embodiments may be cited in function descriptions of corresponding functional modules. Details are not described herein again.

When an integrated unit is used, the electronic device may include a processing module, a storage module, and a communication module. The processing module may be configured to control and manage actions of the electronic device, for example, may be configured to support the electronic device in performing the steps performed by the foregoing units. The storage module may be configured to support the electronic device in storing program code, data, and the like. The communication module may be configured to support communication between the electronic device and another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is the processor and the storage module is the memory, the electronic device in this embodiment may be a device having the structure shown in FIG. 1.

FIG. 17 is a schematic diagram of another possible composition of an electronic device 800 in the foregoing embodiment. As shown in FIG. 17, the electronic device 800 may include a communication unit 810, an input unit 820, a processing unit 830, an output unit (or may be referred to as a display unit) 840, a peripheral interface 850, a storage unit 860, a power supply 870, a video encoder/decoder 880, and an audio encoder/decoder 890.

The communication unit 810 is configured to establish a communication channel, so that the electronic device 800 is connected to a remote server through the communication channel, and downloads media data from the remote server. The communication unit 810 may include a communication module such as a WLAN module, a Bluetooth module, an NFC module, and a baseband module, and a radio frequency (Radio Frequency, RF for short) circuit corresponding to the communication module, and is configured to perform wireless local area network communication, Bluetooth communication, NFC communication, infrared communication, and/or cellular communication system communication, for example, wideband code division multiple access (wideband code division multiple access, W-CDMA) and/or high speed downlink packet access (high speed downlink packet access, HSDPA). The communication module 810 is configured to control communication of components in the electronic device, and may support direct memory access.

The input unit 820 may be configured to implement interaction between a user and the electronic device and/or input information into the electronic device. In a specific implementation of the present invention, the input unit may be a touch panel; or may be another human-machine interaction interface, for example, a physical input key or a microphone; or may be another external information capturing apparatus, for example, a camera.

The processing unit 830 is a control center of the electronic device, may connect to various parts of the entire electronic device through various interfaces and lines, and execute various functions of the electronic device and/or process data by running or executing a software program and/or a module stored in the storage unit and invoking data stored in the storage unit.

The output unit 840 includes but is not limited to an image output unit and a sound output unit. The image output unit is configured to output a text, a picture, and/or a video. In a specific implementation of the present invention, the touch panel used by the input unit 820 may also be used as a display panel of the output unit 840. For example, after detecting a gesture operation of touching on or getting close to the touch panel, the touch panel transmits the gesture operation to the processing unit to determine a type of a touch event, and subsequently, the processing unit provides corresponding visual output on the display panel based on the type of the touch event. In FIG. 17, the input unit 820 and the output unit 840 are used as two independent parts to implement input and output functions of the electronic device. However, in some embodiments, the touch panel and the display panel may be integrated to implement the input and output functions of the electronic device. For example, the image output unit may display various graphical user interfaces as virtual control components, including but not limited to a window, a scroll bar, an icon, and a clipboard, so that a user performs an operation in a touch manner.

The storage unit 860 may be configured to store a software program and a module. The processing unit runs the software program and the module stored in the storage unit, to execute various functional applications of the electronic device and implement data processing.

The video encoder/decoder 880 and the audio encoder/decoder 890 may encode or decode a file, to implement the method in the foregoing embodiments.

An embodiment further provides a computer storage medium. The computer storage medium stores computer instructions. When the computer instructions are run on an electronic device or a processor, the electronic device or the processor is enabled to perform the foregoing related method steps, to implement the method in the foregoing embodiments.

An embodiment further provides a computer program product. When the computer program product runs on a computer or a processor, the computer or the processor is enabled to perform the foregoing related steps, to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus is run, the processor may execute the computer-executable instructions stored in the memory, to enable the chip to perform the methods in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, only division of the foregoing functional modules is used as an example for illustration. During actual application, the foregoing functions may be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and there may be other division manners in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A video transmission method, wherein the method is applied to an encoder, and the method comprises:
generating, by the encoder, a video frame, wherein the video frame comprises a plurality of image blocks, and each of the plurality of image blocks is sent within a respective specified period; and
sending, by the encoder, a target frame to a decoder if a first image block in the plurality of image blocks is not completely sent at an end moment of a corresponding specified period, wherein the target frame is used to request feedback information from the decoder.

2. The method according to claim 1, wherein the target frame is a probe frame, the probe frame indicates the decoder to feed back a status of an image block of the video frame received by the decoder, and the feedback information represents a status of the video frame received by the decoder; or
the target frame is a synchronization frame, the synchronization frame indicates the decoder to perform synchronization processing on the received video frame, and the feedback information represents a synchronization status of the decoder for the received video frame.

3. The method according to claim 1 or 2, wherein the target frame is a medium access control MAC frame.

4. The method according to any one of claims 1 to 3, wherein when the target frame is the probe frame, the target frame is any one of a control frame, a data frame, or a management frame; or
when the target frame is the synchronization frame, the target frame is one of a data frame or a management frame.

5. The method according to claim 4, wherein the control frame comprises a short probe frame;
the data frame comprises a quality of service QoS null frame or a QoS data frame; and
the management frame comprises an action no acknowledgement frame or an acknowledgement frame.

6. The method according to any one of claims 3 to 5, wherein when the target frame is the probe frame, a frame header of the MAC frame carries a private value, and the private value indicates the encoder to request the feedback information from the decoder.

7. The method according to claim 6, wherein the target frame is the control frame, and a control field of a frame header of the control frame is set to the private value;
the target frame is the data frame, and a high-throughput control HTC field of a frame header of the data frame is set to the private value; or
the target frame is the management frame, and an HTC field of a frame header of the management frame is set to the private value, or
a first field in a payload of the management frame is set to the private value.

8. The method according to any one of claims 3 to 5, wherein when the target frame is the synchronization frame, a data part of the MAC frame carries indication information, and the indication information indicates the decoder to perform synchronization processing on the received video frame.

9. The method according to any one of claims 1 to 8, wherein if the encoder does not receive the feedback information, the method further comprises:
resending, by the encoder, the target frame to the decoder.

10. The method according to claim 9, wherein a rate at which the encoder resends the target frame to the decoder is less than a first rate, and the first rate is a rate at which the encoder sends the target frame to the decoder when the first image block is not completely sent at the end moment of the corresponding specified period.

11. The method according to any one of claims 1 to 10, wherein the rate at which the encoder sends the target frame to the decoder is set to at least one of the following:
an expected rate collected by a system, a rate at which the target frame is successfully sent recently, or a mapping value of the rate at which the target frame is successfully sent recently.

12. The method according to any one of claims 1 to 11, wherein the image block comprises a tile tile or a slice slice segment.

13. A video transmission method, wherein the method is applied to a decoder, and the method comprises:
receiving, by the decoder, a target frame, wherein the target frame is used to request feedback information, and the target frame is sent by an encoder when a first image block in a plurality of image blocks is not completely sent at an end moment of a corresponding specified period; and
sending, by the decoder, the feedback information to the encoder in response to the target frame.

14. The method according to claim 13, wherein the target frame is a probe frame, the probe frame indicates the decoder to feed back a status of an image block of a video frame received by the decoder, and the feedback information represents a status of the video frame received by the decoder; or
the target frame is a synchronization frame, the synchronization frame indicates the decoder to perform synchronization processing on the received video frame, and the feedback information represents a synchronization status of the decoder for the received video frame.

15. The method according to claim 13 or 14, wherein the target frame is a medium access control MAC frame.

16. The method according to claim 15, wherein when the target frame is the probe frame, the target frame is any one of a control frame, a data frame, or a management frame; or
when the target frame is the synchronization frame, the target frame is one of a data frame or a management frame.

17. The method according to claim 16, wherein the control frame comprises a short probe frame;
the data frame is a quality of service QoS null frame or a QoS data frame; and
the management frame is an action no acknowledgement frame or an acknowledgement frame.

18. The method according to any one of claims 15 to 17, wherein when the target frame is the probe frame, a frame header of the MAC frame carries a private value, and the private value indicates the encoder to request the feedback information from the decoder.

19. The method according to claim 18, wherein the target frame is the control frame, and a control field of a frame header of the control frame is set to the private value;
the target frame is the data frame, and a high-throughput control HTC field of a frame header of the data frame is set to the private value; or
the target frame is the management frame, and an HTC field of a frame header of the management frame is set to the private value, or
a first field in a payload of the management frame is set to the private value.

20. The method according to any one of claims 15 to 17, wherein when the target frame is the synchronization frame, a data part of the MAC frame carries indication information, and the indication information indicates the decoder to perform synchronization processing on the received video frame.

21. The method according to any one of claims 13 to 20, wherein the sending, by the decoder, the feedback information to the encoder comprises:
generating, by a data link layer in the decoder, the feedback information based on the target frame; and
sending, by the decoder, the feedback information to the encoder.

22. The method according to any one of claims 13 to 21, wherein a rate at which the decoder sends the feedback information to the encoder is set to at least one of the following:
an expected rate collected by a system, a rate at which a video frame sent by the encoder is successfully received recently, or a mapping value of the rate at which the video frame sent by the encoder is successfully received recently.

23. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 12 or 13 to 22.

24. A video transmission apparatus, wherein the apparatus comprises at least one processor, and when program instructions are executed in the at least one processor, the method according to any one of claims 1 to 12 or 13 to 22 is implemented.

25. A computer storage medium, comprising computer instructions, wherein when the computer instructions are run on an electronic device or a processor, the electronic device or the processor is enabled to perform the method according to any one of claims 1 to 12 or 13 to 22.

26. A computer program product, wherein when the computer program product runs on a computer or a processor, the computer or the processor is enabled to perform the method according to any one of claims 1 to 12 or 13 to 22.
